# EUROPEAN PATENT APPLICATION

(11) **EP 4 675 646 A1**
(43) Date of publication of application: **07.01.2026**
(21) Application number: 24764059.2
(22) Date of filing: 24.04.2024
(51) Int. Cl.: G21F 1/10, C09D 7/61, C09D 123/08, C09D 129/04, G21F 3/00

(54) **RADIATION-SHIELDING COMPOSITION, COMPOSITION, AND COATING OR COATING MATERIAL**

(30) Priority: 28.02.2023 JP 2023030175; 28.02.2024 JP 2024028793
(71) Applicant: Mitsubishi Chemical Corporation, Tokyo 100-8251 (JP)
(72) Inventor: FUJITA, Rie, Tokyo 100-8251 (JP); SAKAI, Norihito, Tokyo 100-8251 (JP); MUTA, Takatoshi, Tokyo 100-8251 (JP); UEDA, Kodai, Tokyo 100-8251 (JP)
(74) Representative: Kuhnen & Wacker Patent- und Rechtsanwaltsbüro PartG mbB
(86) International application number: PCT/JP2024/016033
(87) International publication number: WO 2024/181582

(57) **Abstract**

The present invention relates to a radiation shielding composition containing a polyvinyl alcohol-based resin. The present invention also relates to a coating or a coating material containing the radiation shielding composition; a medical device, an electronic member, a member for nuclear power generation, or a member for aircraft or space having a layer formed using the coating or the coating material; a molded product containing the radiation shielding composition; a medical device, an electronic member, a member for nuclear power generation, or a member for aircraft or space having the molded product. The present invention also relates to a composition containing a polyvinyl alcohol-based resin and at least one selected from the group consisting of compounds containing at least one of Gd, B, and Li.

## Description

### TECHNICAL FIELD

The present invention relates to a radiation shielding composition, a composition, and a coating or a coating material.

### BACKGROUND ART

Radiation is broadly divided into electromagnetic radiation and particle radiation. Major electromagnetic radiations are gamma rays and X-rays, and main particle radiations include alpha rays (α-rays = helium atomic nuclei) and beta rays (β-rays = electrons), which are generated from radioactive isotopes, and electrons, protons, neutrons, and heavy particles (heavy ions), which have high energy and are generated in a space environment, an accelerator facility, and the like.

Among them, the electrically neutral neutrons are not blocked by a substance due to electromagnetic interaction, and therefore, in order to protect the human body and the like, a shielding material according to its properties is particularly required.

The neutrons are generated by nuclear fission in a nuclear reactor, and also continuously generated from a spent nuclear fuel by spontaneous nuclear fission and (α, n) reaction. **In** addition, it also occurs due to a high energy particle nuclear reaction in a particle accelerator used for medical/research or the like, or a photonuclear reaction (nuclear reaction between photons and nuclear nuclei) in a medical X-ray linac that exceeds twenty million electron volts (20 MeV). **In** addition to various fields such as energy and medicine, industrial use for the purpose of non-destructive inspection and medical use such as cancer treatment are also performed.

Since neutrons with high energy reach the deep portion of the human body and give large energy to the elements constituting the human body, the dose conversion coefficient representing the risk of radiation to the human body increases, a great impact on the external exposure of the human body is caused. Neutrons from a medical accelerator or nuclear reactor, from used nuclear fuel, or the like are mainly generated in an energy range called a fast neutron with kinetic energy of about one million electron volts (MeV), and thus efficiently shielding fast neutrons is highly effective in reducing external exposure due to neutron rays. It is known that deceleration due to elastic scattering with a hydrogen atom having substantially the same mass as a neutron is effective for shielding a fast neutron, and a high hydrogen-containing material has been used as a fast neutron shielding material. For example, among resins, it is known that a ratio of hydrogen atoms in polyethylene, particularly high-density polyethylene is relatively large, and neutron shielding performance is excellent.

For example, Patent Document 1 describes a neutron absorbing material made of a boron compound, preferably a super polymer polyethylene in which boron carbide B 4C is embedded.

Patent Document 2 discloses a neutron shielding structure including an inner layer made of polyethylene containing a substance that absorbs neutrons, an intermediate layer disposed on the inner layer and made of polyethylene, and an outer layer disposed on the intermediate layer and made of polyethylene containing a substance that absorbs neutrons.

### CITATION LIST

### PATENT LITERATURE

Patent Literature 1: JP-H3-107797A
Patent Literature 2: JP-2015-010826A

### SUMMARY OF INVENTION

### TECHNICAL PROBLEM

However, from the viewpoint of pursuing safety of a nuclear reactor or the like, a material having more excellent neutron shielding performance is required.

An object of the present invention is to provide a radiation shielding composition particularly excellent in neutron shielding performance.

### SOLUTION TO PROBLEM

As a result of intensive studies, the present inventors have found that a radiation shielding composition using a polyvinyl alcohol-based resin has a high neutron shielding performance, and have completed the present invention.

That is, the present invention relates to the following aspects 1 to 22.

An aspect 1 of the present invention is a radiation shielding composition containing a polyvinyl alcohol-based resin.

An aspect 2 of the present invention is the radiation shielding composition according to the aspect 1, in which the radiation includes one or more selected from the group consisting of neutrons, protons, and heavy particles.

An aspect 3 of the present invention is the radiation shielding composition according to the aspect 1 or 2, in which the polyvinyl alcohol-based resin comprises an ethylene-vinyl ester-based copolymer saponified product.

An aspect 4 of the present invention is the radiation shielding composition according to the aspect 3, in which the ethylene-vinyl ester copolymer saponified product has an ethylene content of 0.1-77 mol%.

An aspect 5 of the present invention is the radiation shielding composition according to the aspect 3, in which the ethylene-vinyl ester copolymer saponified product has an ethylene content of 20-60 mol%.

An aspect 6 of the present invention is the radiation shielding composition according to any one of the aspects 1 to 5, in which the polyvinyl alcohol-based resin comprises a modified polyvinyl alcohol-based resin containing a side chain 1,2-diol structural unit.

An aspect 7 of the present invention is the radiation shielding composition according to any one of the aspects 1 to 6, further comprising an inorganic filler.

An aspect 8 of the present invention is the radiation shielding composition according to the aspect 7, containing 30% by mass or more of the inorganic filler.

An aspect 9 of the present invention is the radiation shielding composition according to the aspect 7 or 8, in which the inorganic filler includes at least one selected from the group consisting of Gd₂O₃, B₂O₃, B₄C and LiF.

An aspect 10 of the present invention is the radiation shielding composition according to any one of the aspects 1 to 9, which is an aqueous or solvent-based resin emulsion.

An aspect 11 of the present invention is a coating or a coating material comprising the radiation shielding composition according to any one of the aspects 1 to 10.

An aspect 12 of the present invention is a molded product comprising the radiation shielding composition according to any one of the aspects 1 to 10.

An aspect 13 of the present invention is a medical device having a layer formed using the coating or the coating material according to the aspect 11.

An aspect 14 of the present invention is an electronic member having a layer formed using the coating or the coating material according to the aspect 11.

An aspect 15 of the present invention is a nuclear power generation member having a layer formed using the coating or the coating material according to the aspect 11.

An aspect 16 of the present invention is a member for aircraft or space having a layer formed using the coating or the coating material according to the aspect 11.

An aspect 17 of the present invention is a medical device having the molded product according to the aspect 12.

An aspect 18 of the present invention is an electronic member having the molded product according to the aspect 12.

An aspect 19 of the present invention is a nuclear power generation member having the molded product according to the aspect 12.

An aspect 20 of the present invention is a member for aircraft or space having the molded product according to the aspect 12.

An aspect 21 of the present invention is a composition comprising a polyvinyl alcohol-based resin and at least one selected from the group consisting of compounds containing at least one of Gd, B, and Li.

An aspect 22 of the present invention is the composition according to the aspect 21, which is used as a radiation shielding composition.

### ADVANTAGEOUS EFFECTS OF INVENTION

According to the present invention, it is possible to provide a radiation shielding composition particularly excellent in neutron shielding performance.

### DESCRIPTION OF EMBODIMENTS

Hereinafter, the present invention will be described in detail, whereas the present invention is not limited to the following embodiments, and can be optionally modified and implemented without departing from the gist of the present invention. In addition, "to" indicating a numerical range is used to include the numerical values described before and after it as a lower limit value and an upper limit value.

### (Radiation Shielding Composition)

The radiation shielding composition according to the embodiment of the present invention contains a polyvinyl alcohol-based resin. As a result of intensive studies, the present inventors have found that a polyvinyl alcohol-based resin is particularly excellent in neutron shielding performance and is suitable as a radiation shielding composition. In particular, the inventors have found that the polyvinyl alcohol-based resin has better neutron shielding performance than polyethylene despite the fact that the hydrogen ratio (weight ratio of hydrogen atoms in the molecule) is smaller than that of polyethylene. The reason is presumed that the hydroxyl groups contained in the polyvinyl alcohol-based resin form a hydrogen bond to improve the density of the resin and improve the hydrogen density (intermolecular cohesive force) in the resin.

The radiation shielding composition according to the embodiment of the present invention is excellent in radiation shielding performance. Examples of the target radiation include neutrons, protons, gamma rays, X-rays, α-rays, β-rays, electrons, protons, and heavy particles. The target radiation preferably includes one or more selected from the group consisting of neutrons, protons, and heavy particles. Similar to neutrons, deceleration due to collision with atomic nuclei is effective when shielding the radiation of protons and heavy particles. Therefore, it is considered that the radiation shielding composition according to the embodiment of the present invention is particularly excellent in neutron shielding performance and is also excellent in shielding performance of protons and heavy particles, among radiation. In other words, the radiation shielding composition according to the embodiment of the present invention is particularly excellent in performance of decelerating radiation by collision with atomic nucleiand and shielding radiation.

Hereinafter, more preferred embodiments of the radiation shielding composition will be further described.

### (Polyvinyl Alcohol-Based Resin)

The polyvinyl alcohol-based resin (hereinafter, also referred to as PVA-based resin) used in the present embodiment has a vinyl alcohol structural unit corresponding to a saponification degree and a vinyl ester structural unit of an unsaponified portion.

The radiation shielding composition contains at least a PVA-based resin, and may be made of a PVA-based resin. That is, the proportion of the PVA-based resin in the radiation shielding composition is, for example, preferably 11% by mass to 100% by mass, depending on the content of the inorganic filler described later.

The proportion of the PVA-based resin is preferably 11% by mass or more, more preferably 20% by mass or more, still more preferably 30% by mass or more, even more preferably 40% by mass or more, even more preferably 50% by mass or more, still more preferably 60% by mass or more, and most preferably 70% by mass or more, from the viewpoint of storage stability of the coating. On the other hand, from the viewpoint of radiation shielding properties, the upper limit is preferably 100% by mass or less, more preferably 90% by mass or less, still more preferably 80% by mass or less, and most preferably 70% by mass or less.

Examples of the PVA-based resin include, in addition to unmodified PVA, a copolymerized modified PVA obtained by copolymerizing various monomers at the time of producing a vinyl ester-based resin and saponifying the monomers, and various post-modified PVAs obtained by introducing various functional groups into unmodified PVA by post-modification. Such modification can be performed within a range in which the polymerization degree sufficient for forming the polymer of the PVA-based resin is not lost. In some cases, the modified PVA may be further post-modified.

Examples of a monomer used for the copolymerization with the vinyl ester-based monomer in the production of the vinyl ester-based resin when obtaining the copolymerized modified PVA include: olefins such as propylene, isobutylene, α-octene, α-dodecene, and α-octadecene; unsaturated acids such as acrylic acid, methacrylic acid, crotonic acid, maleic acid, maleic anhydride, and itaconic acid, salts thereof, and mono- or dialkyl esters thereof; nitriles such as acrylonitrile and methacrylonitrile; amides such as acrylamide and methacrylamide; olefin sulfonic acids such as ethylene sulfonic acid, allyl sulfonic acid, and methallyl sulfonic acid, or salts thereof; alkyl vinyl ethers; N-acrylamidomethyltrimethylammonium chloride; allyltrimethylammonium chloride; dimethyl allyl vinyl ketone; N-vinylpyrrolidone; vinyl chloride; vinylidene chloride; polyoxyalkylene (meth)allyl ethers such as polyoxyethylene (meth)allyl ether and polyoxypropylene (meth)allyl ether; polyoxyalkylene (meth)acrylates such as polyoxyethylene (meth)acrylate and polyoxypropylene (meth)acrylate; polyoxyalkylene (meth)acrylamides such as polyoxyethylene (meth)acrylamide and polyoxypropylene (meth)acrylamide; polyoxyethylene (1-(meth)acrylamide-1,1-dimethylpropyl) ester; polyoxyalkylene vinyl ethers such as polyoxyethylene vinyl ether and polyoxypropylene vinyl ether; polyoxyalkylene allylamines such as polyoxyethylene allylamine and polyoxypropylene allylamine; polyoxyalkylene vinylamines such as polyoxyethylene vinylamine and polyoxypropylene vinylamine; and hydroxy group-containing α-olefins such as 3-buten-1-ol, 4-penten-1-ol, 5-hexen-1-ol, or derivatives thereof such as acylated products thereof. Here, (meth)allyl means allyl or methallyl, (meth)acryl means acryl or methacryl, and (meth)acrylate means acrylate or methacrylate.

Examples of a monomer used for the copolymerization with the vinyl ester-based monomer include compounds having a diol such as 3,4-dihydroxy-1-butene, 3,4-diacyloxy-1-butene, 3-acyloxy-4-hydroxy-1-butene, 4-acyloxy-3-hydroxy-1-butene, 3,4-diacyloxy-2-methyl-1-butene, 4,5-dihydroxy-1-pentene, 4,5-diacyloxy-1-pentene, 4,5-dihydroxy-3-methyl-1-pentene, 4,5-diacyloxy-3-methyl-1-pentene, 5,6-dihydroxy-1-hexene, 5,6-diacyloxy-1-hexene, glycerin monoallyl ether, 2,3-diacetoxy-1-allyloxypropane, 2-acetoxy-1-allyloxy-3-hydroxypropane, 3-acetoxy-1-allyloxy-2-hydroxypropane, glycerin monovinyl ether, glycerin monoisopropenyl ether, vinyl ethylene carbonate, and 2,2-dimethyl-4-vinyl-1,3-dioxolane. The content of these monomers is preferably 45 mol% or less, more preferably 40 mol% or less, still more preferably 35 mol% or less, and particularly preferably 30 mol% or less from the viewpoint of radiation shielding properties.

Examples of the post-modified PVA obtained by introduction of functional groups by post-modification include a resin having an acetoacetyl group introduced by a reaction with a diketene, a resin having a polyalkylene oxide group introduced by a reaction with ethylene oxide, a resin having a hydroxyalkyl group introduced by a reaction with an epoxy compound or the like, or a resin obtained by reacting an aldehyde compound having any of various functional groups with a PVA-based resin.

As the modified PVA-based resin, a PVA-based resin containing a structural unit having a primary hydroxyl group in a side chain may be used. A PVA-based resin containing a structural unit having a primary hydroxyl group in a side chain tends to have excellent melt moldability, which is preferable. Examples of the PVA-based resin containing a structural unit having a primary hydroxyl group in a side chain include a modified PVA-based resin having a 1,2-diol structural unit in a side chain, a modified PVA-based resin having a hydroxyalkyl group structural unit in a side chain, and the like, and a modified PVA-based resin having a 1,2-diol structural unit in a side chain is more preferable. The modified PVA-based resin having a side-chain 1,2-diol structural unit can be produced by a known production method. For example, the above modified PVA-based resin can be produced by a method described in JP2002-284818A, JP2004-285143A, or JP2006-95825A.

When the PVA-based resin is a modified PVA-based resin, a modification rate in the modified PVA-based resin, that is, a content of structural units derived from various monomers in the copolymer or functional groups introduced by post-modification, is preferably 0.1 mol% to 20 mol%, although it cannot be generalized since characteristics differ greatly depending on the type of functional group.

The PVA-based resin (A) to be used in the present embodiment may be of one type or a mixture of two or more types. Examples of the case of using two or more types of PVA-based resins include a combination of two or more unmodified PVA-based resins having different saponification degrees, viscosity average polymerization degrees, and melting points; a combination of an unmodified PVA-based resin and a modified PVA-based resin; and a combination of two or more modified PVA-based resins having different saponification degrees, viscosity average polymerization degrees, melting points, types of functional groups, modification ratios, and the like.

From the viewpoint of further improving the neutron shielding performance, the PVA-based resin preferably contains an ethylene-vinyl ester copolymer saponified product (hereinafter, also referred to as EVOH). EVOH is generally a resin obtained by saponifying a copolymer of ethylene and a vinyl ester monomer (ethylene-vinyl ester copolymer), and corresponds to the above-mentioned copolymerized modified PVA. The EVOH mainly includes, for example, a structural unit derived from ethylene and a vinyl alcohol structural unit, and includes a vinyl ester structural unit that remains without being saponified.

The ethylene content in EVOH is preferably 0.1 mol% to 77 mol%, more preferably 20 mol% to 60 mol%, still more preferably 23 mol% to 50 mol%, still more preferably 25 mol% to 48 mol%, still more preferably 25 mol% to 45 mol%, still more preferably 25 mol% to 40 mol%, still more preferably 25 mol% to 35 mol%, still more preferably 25 mol% to 32 mol%, and particularly preferably 29 mol% to 32 mol%, as measured based on ISO 14663. That is, the ethylene content is preferably 0.1 mol% or more, more preferably 20 mol% or more, still more preferably 23 mol% or more, still more preferably 25 mol% or more, and particularly preferably 29 mol% or more. The ethylene content is preferably 77 mol% or less, more preferably 60 mol% or less, still more preferably 50 mol% or less, still more preferably 48 mol% or less, still more preferably 45 mol% or less, still more preferably 40 mol% or less, still more preferably 35 mol% or less, and particularly preferably 32 mol% or less. When the ethylene content is equal to or higher than the above lower limit value, the crystallinity is improved, the arrangement of the hydroxyl groups can be adjusted to an arrangement in which hydrogen bonding is easily performed, and the radiation shielding properties are improved. When the ethylene content is equal to or less than the above upper limit value, the number of hydroxyl groups in the material can be increased, so that the number of hydrogen bonds among the hydroxyl groups increases, and the radiation shielding properties can be improved.

The EVOH may further include a structural unit derived from the various monomers described above as a monomer used for copolymerization with a vinyl ester-based monomer in addition to the ethylene structural unit and the vinyl alcohol structural unit (including an unsaponified vinyl ester structural unit). The EVOH may have a functional group introduced by the post-modification described above.

The saponification degree (measured according to JIS K 6726) of the PVA-based resin used in the present embodiment, including the saponification degree when the PVA-based resin is EVOH, is preferably, for example, 60 mol% to 100 mol%.

The preferable range of the saponification degree varies depending on the modified species, and for example, in the case of an unmodified PVA-based resin, the saponification degree is generally 70 mol% or more, and the upper limit thereof is, for example, 99.9 mol% or less. That is, the saponification degree of the unmodified PVA-based resin may be 70 mol% to 99.9 mol%.

The saponification degree of EVOH is generally 90 mol% to 100 mol%, preferably 95.0 mol% to 100 mol%, and particularly preferably 99 mol% to 100 mol%.

When the saponification degree of the PVA-based resin is the above lower limit or more, the PVA-based resin can be easily uniformly mixed with the inorganic filler described later. In addition, since the saponification degree is relatively large, neutron shielding performance can be further improved. The saponification degree may be 100 mol%, but may be not more than the upper limit from the viewpoint of industrial production.

The melt flow rate (MFR) (210°C and a load of 2160 g) of the PVA-based resin (including the case of EVOH) is usually 0.5 g/10 min to 100 g/10 min, preferably 1 g/10 min to 50 g/10 min, and particularly preferably 3 g/10 min to 35 g/10 min. That is, the MFR of the PVA-based resin may be 0.5 g/10 min or more, preferably 1 g/10 min or more, and particularly preferably 3 g/10 min or more. The MFR of the PVA-based resin may be 100 g/10 minutes or less, preferably 50 g/10 minutes or less, and particularly preferably 35 g/10 minutes or less. When MFR is equal to or greater than the above lower limit value, molding processability such as melt extrusion can be improved. In addition, when the MFR is equal to or less than the above upper limit value, the strength of the molded product when molded into a film, a sheet, or a molded product can be improved.

The viscosity average polymerization degree (measured according to JIS K 6726) of the PVA-based resin used in the present embodiment is generally 250 to 3000, preferably 400 to 1700, particularly preferably 450 to 1100, and still more preferably 450 to 800. That is, the viscosity average polymerization degree of the PVA-based resin may be, for example, 250 or more, preferably 400 or more, and particularly preferably 450 or more. The viscosity average polymerization degree of the PVA-based resin may be 3000 or less, preferably 1700 or less, particularly preferably 1100 or less, and still more preferably 800 or less. When the viscosity-average polymerization degree is equal to or greater than the above lower limit value, the strength of a film, a coating film, and other molded products can be ensured. When the viscosity-average polymerization degree is equal to or less than the above upper limit value, a general-purpose molding method can be utilized, and can be developed in various applications.

Examples of a method for producing the PVA-based resin to be used in the present embodiment include a method of polymerizing a vinyl ester-based monomer such as vinyl acetate and performing saponification. When the copolymerized modified PVA is obtained, for example, a monomer composition containing a vinyl ester-based monomer and a monomer used for copolymerization is polymerized and saponified.

As the above vinyl ester-based monomer, for example, vinyl propionate, vinyl butyrate, vinyl caproate, vinyl caprylate, vinyl caprate, vinyl laurate, vinyl myristate, vinyl palmitate, vinyl stearate, vinyl cyclohexanecarboxylate, vinyl piperate, vinyl octylate, vinyl monochloroacetate, vinyl adipate, vinyl methacrylate, vinyl crotonate, vinyl sorbate, vinyl benzoate, vinyl cinnamate, and vinyl trifluoroacetate can be used. Vinyl acetate is preferably used as the vinyl ester-based monomer from the viewpoint of price and availability.

The polymerization of the vinyl ester-based monomer can be performed by any known polymerization method, for example, solution polymerization, suspension polymerization, and emulsion polymerization. Among these, it is preferable to perform the solution polymerization which can remove reaction heat efficiently under a reflux. Examples of a solvent for the solution polymerization include an alcohol, and a lower alcohol having 1 to 3 carbon atoms is preferably used.

A known saponification method can also be adopted for saponification of the obtained polymer. That is, the saponification can be carried out using an alkali catalyst or an acid catalyst in a state in which the polymer is dissolved in an alcohol or water/alcohol solvent.
As the above alkali catalyst, for example, hydroxides or alcoholates of alkali metals such as potassium hydroxide, sodium hydroxide, sodium methylate, sodium ethylate, potassium methylate, and lithium methylate can be used.

Generally, transesterification reaction using an alkali catalyst in an anhydrous alcohol solvent is preferably used in terms of a reaction rate and an ability to reduce impurities such as fatty acid salts.

A reaction temperature for the saponification reaction is usually 20°C to 60°C. When the reaction temperature is too low, a reaction rate tends to decrease and a reaction efficiency tends to decrease, and when the reaction temperature is too high, the temperature may become higher than a boiling point of the reaction solvent, which tends to lower safety in production. Note that when the saponification is carried out under high pressure using a tower type continuous saponification tower with high pressure resistance, the saponification can be carried out at a higher temperature, for example, 80°C to 150°C, and it is also possible to obtain a high degree of saponification in a short period of time with a small amount of the saponification catalyst.

### (Inorganic Filler)

The radiation shielding composition preferably further contains an inorganic filler. For example, the neutron shielding performance of the radiation shielding composition can be further enhanced by incorporating a compound containing an element having good absorption performance to neutrons as a filler. From this viewpoint, the inorganic filler preferably contains a compound containing one or more elements selected from the group consisting of Gd, B, and Li. The compound is not particularly limited, and examples thereof include an oxide, a composite oxide, a sulfide, and a hydroxide containing each element. All of these elements have a high absorption cross-sectional area with respect to neutrons. Among these, the absorption cross-sectional areas of Gd and B are larger among these elements, and the inorganic filler more preferably contains at least one selected from the group consisting of compounds containing at least one of Gd and B. Among these elements, the absorption cross-sectional area of Gd is the largest among these elements, and the inorganic filler most preferably contains a compound containing Gd. In another aspect, from the viewpoint of stability and toxicity, the inorganic filler preferably contains at least one selected from the group consisting of Gd₂O₃, B₂O ₃, B₄C and LiF.

Examples of the compound containing Gd include an oxide containing, a composite oxide, a sulfide, a hydroxide, and the like containing Gd, and more specific examples thereof include gadolinium oxide Gd₂O₃, gadolinium gallium garnet Gd₃Ga₅O₁₂, gadolinium ferrite GdFeO₃,Gd₃Fe₅O₁₂, gadolinium hydroxide Gd(OH)₃, gadolinium silicate activated by cerium Gd₂SiO₅:Ce, gadolinium borate activated by europium GdBO₃:Eu, gadolinium oxide activated by europium Gd₂O₃:Eu, gadolinium sulfate activated by europium Gd₂O₂S:Eu, gadolinium aluminate activated by europium Gd₃Al₅O₁₂:Eu, gadolinium gallate activated by europium Gd₃Ga₅O₁₂:Eu, gadolinium vanadate activated by europium GdVO₄:Eu, gadolinium gallate activated by cerium or chromium Gd₃Ga₅O₁₂:Ce,Cr, gadolinium oxide activated by terbium Gd₃Ga₅O₁₂:Tb, gadolinium sulfate activated by terbium Gd₂O₂S:Tb, gadolinium sulfate activated by praseodymium Gd₂O₂S:Pr, gadolinium gallate activated by terbium Gd₃Ga₅O₁₂:Tb, gadolinium aluminate activated by terbium Gd₃Al₅O₁₂:Tb, and the like, and gadolinium oxide is preferable from the viewpoint of excellent stability in the atmosphere, and Gd₂O₃ is more preferable.

Examples of the compound containing B include an oxide, a composite oxide, a sulfide, a hydroxide, a carbide, a nitride, a phosphide, and the like containing B, and more specific examples thereof include boron carbide B₄C, boron nitride BN, boron phosphide BP, boron sulfide B₂S₃, boron phosphate BPO₄, and boron oxide B₂O₃, and the like, and B₄C and B₂O₃ is preferable from the viewpoint of excellent stability in the atmosphere.

Examples of the compound containing Li include an oxide, a composite oxide, a sulfide, a fluoride, a hydroxide, and the like containing Li, and examples thereof include lithium oxide Li₂O, lithium peroxide Li₂O₂, lithium aluminate LiAlO₂, lithium metaborate LiBO₂, lithium tetraborate Li₂B₄O₇, lithium germanate Li₂GeO₃, lithium molybdate Li₂MoO₄, lithium niobate LiNbO₃, lithium metasilicate Li₂SiO₃, lithium tantalate LiTaO₃, lithium titanate Li₂TiO₃, lithium vanadate LiVO₃, lithium tungstate LiWO₄, lithium zirconate Li₂ZrO₃, lithium fluoride LiF, lithium nitride Li₃N, lithium hydroxide LiOH H₂O, and methoxylithium LiOCH₃, and LiF and Li₂O are preferable from the viewpoint of excellent stability in the atmosphere.

The radiation shielding composition may contain, as an inorganic filler, a compound containing an element having absorption performance for various kinds of radiation other than neutrons, protons, and heavy particles, a known additive, or the like, in addition to a compound containing an element having absorption performance for neutrons, protons, and heavy particles according to desired performance. Specific examples of the compound containing an element having absorption performance for various radiation other than neutrons, protons, and heavy particles include compounds containing one or more elements selected from the group consisting of lead, iron, Bi, Y, Zr, Nb, Mo, Hf, Ta, W, and lanthanoid elements. Examples of the compound containing these elements include a composite oxide, a sulfide, and a hydroxide. Among them, Zr O ₂ is particularly preferable from the viewpoint that γ-rays generated in the nuclear reaction can be simultaneously absorbed and easy to handle.

The proportion of the compound containing one or more elements selected from the group consisting of Gd, B, and Li in the inorganic filler may be 0% by mass according to the desired performance, but is preferably 20% by mass or more, more preferably 30% by mass or more, still more preferably 40% by mass or more, still more preferably 50% by mass or more, particularly preferably 60% by mass or more, and may be 100% by mass, from the viewpoint of improving the shielding performance with respect to neutrons and protons.

The content of the inorganic filler in the radiation shielding composition is preferably, for example, 10% to 90% by mass. That is, from the viewpoint of improving the radiation shielding properties, the content of the inorganic filler is preferably 10% by mass or more, more preferably 20% by mass or more, and particularly preferably 30% by mass or more. The content of the inorganic filler in the radiation shielding composition is preferably 90% by mass or less, more preferably 80% by mass or less, still more preferably 70% by mass or less, still more preferably 50% by mass or less, and particularly preferably 40% by mass or less, from the viewpoint of the strength, shape stability, and molding processability of various molded products.

The shape and the like of the inorganic filler are not particularly limited, but in general, a powder form is suitably used. The average particle diameter of the inorganic filler is, for example, preferably 1 µm to 50 µm, more preferably 2 µm to 30 µm, and still more preferably 2 µm to 20 µm. That is, the average particle diameter of the inorganic filler is preferably 1 µm or more, and more preferably 2 µm or more. The average particle diameter of the inorganic filler is preferably 50 µm or less, more preferably 30 µm or less, and still more preferably 20 µm or less. When the average particle diameter is equal to or less than the above upper limit value, the particle arrangement in the coating film can be designed densely, and the radiation shielding properties can be improved. When the average particle diameter is equal to or more than the above lower limit, the inorganic filler can be uniformly dispersed in the coating film or the molded product. Here, the average particle size refers to a median diameter (d50) measured by a laser diffraction particle size distribution measuring apparatus according to JIS 8825: particle size analysis-laser diffraction/scattering method.

When the radiation-shielding composition contains a polyvinyl alcohol-based resin and an inorganic filler, the radiation-shielding composition can be produced by mixing them by a known method such as melt-kneading, water-based or solvent-based dispersion of a resin and a filler, or mixing of an aqueous or solvent-based resin emulsion and an inorganic filler. From the viewpoint of lowering the heating temperature in the mixing step, a water-based or solvent-based dispersion of a resin and a filler, or a mixture of an aqueous or solvent-based resin emulsion and an inorganic filler is preferable, and a mixture of water-based or solvent-based resin emulsion and an inorganic filler is particularly preferable. That is, the polyvinyl alcohol-based resin is preferably contained in the radiation shielding composition in the form of an emulsion. By mixing the polyvinyl alcohol-based resin in the form of an emulsion with the inorganic filler, the heating temperature in the mixing step can be lowered, so that more fillers can be contained, and neutron shielding performance can be further enhanced.

When an aqueous or solvent-based resin emulsion and an inorganic filler are mixed as the method for producing the radiation shielding composition, examples of the method for producing an aqueous or solvent-based resin emulsion include a high-pressure homogenizer method and an extrusion forcemechanical emulsification method. Among them, for the efficient production, the extrusion forcemechanical emulsification method is advantageous in terms of continuous productivity.

The radiation shielding composition may further contain additives other than the polyvinyl alcohol-based resin and the inorganic filler as long as the effects of the present invention are not impaired. Examples of the additive include a stabilizer (thickener), a surfactant, a colorant, a plasticizer, and a lubricant.

### (Use)

The radiation shielding composition according to the embodiment of the present invention is excellent in radiation shielding performance, particularly neutron shielding performance, and thus is suitably used for protecting an article or the like including a person or a robot that can be exposed to radiation. More specifically, the radiation shielding composition according to the embodiment of the present invention is suitably used for, for example, nuclear power generation related applications such as a nuclear reactor or a member around a nuclear reactor, a case or container for nuclear waste and nuclear fuel debris, aerospace applications such as aircraft and space ship members, satellites, the moon- or Mars-related infrastructures, members used for medical accelerators, medical applications such as peripheral members of medical equipment utilizing radiation, and electronic materials including semiconductors as parts.

When the thickness of the molded product is 1 mm, the neutron transmittance of the molded product formed using the radiation shielding composition according to the embodiment of the present invention is preferably less than 25%, particularly preferably less than 22%, and still more preferably less than 20%.

When the molded product has a thickness of 5 mm, the neutron transmittance of the molded product is preferably less than 18%, particularly preferably less than 17.8%, and still more preferably less than 17.6%.

The neutron transmittance is measured by the method described in Examples.

In the various applications described above, a molded product of the radiation shielding composition molded into a desired shape as various articles or members may be used, or by preparing a coating or a coating material containing a radiation shielding composition and applying or coating the coating or the coating material to various members or the like. That is, the present invention also relates to a coating or a coating material containing a radiation shielding composition according to an embodiment of the present invention. The coating or coating material containing the radiation shielding composition can be produced, for example, in the same manner as a known coating or coating material containing a PVA-based resin. In addition, by applying or coating a coating or a coating material containing the radiation shielding composition on various members or the like followed by drying as necessary, a layer formed using the coating or the coating material can be formed on various members, and these can be suitably used for various applications such as medical equipment, electronic members, members for nuclear power generation, or members for aircraft or space. When the radiation shielding composition contains an inorganic filler, it is preferable to prepare a radiation shielding composition having properties suitable for a coating or a coating material by emulsion mixing, for example, a PVA-based resin, an inorganic filler, and an additive to be added as necessary.

In addition, since the molded product obtained by molding the radiation shielding composition according to the embodiment of the present invention is excellent in radiation shielding performance, particularly neutron shielding performance, it is suitably used as various articles such as medical equipment, electronic members, nuclear power generation members, or members for aircraft or space, or members constituting them.

### (Composition Containing Polyvinyl Alcohol Resin and at Least One Selected from Group Consisting of Compounds Containing at Least One of Gd, B, and Li)

The present invention also relates to a composition containing a polyvinyl alcohol-based resin and at least one selected from the group consisting of compounds containing at least one of Gd, B, and Li. As described above, the present inventors have found that the PVA-based resin has excellent neutron shielding performance. A compound containing at least one of Gd, B, and Li has excellent neutron absorption performance. Therefore, the composition has excellent neutron shielding performance. In particular, a composition containing a polyvinyl alcohol-based resin and a compound containing Gd has particularly excellent neutron shielding performance.

As another aspect, a composition containing a polyvinyl alcohol-based resin and at least one selected from the group consisting of Gd₂O₃, B₂O₃, B₄C and LiF has excellent neutron absorption performance and is also preferable in terms of stability and toxicity.

These compositions are suitably used in a radiation shielding composition.

### [Examples]

The present invention will be described in more detail below with reference to Examples and Comparative Examples, but the present invention is not limited to these Examples. Note that in the following Examples and Comparative Examples, "parts" and "%" are based on mass unless otherwise specified.

### (Examples 1 to 5)

As the PVA-based resin, the resins shown in Table 1 were used. A composition (radiation shielding composition) was obtained by mixing a PVA-based resin and a filler such that a Gd ₂O ₃ powder (manufactured by Nippon Yttrium Co., Ltd., product name: gadolinium oxide 99.9%, average particle diameter: 2.32 µm) was used as the inorganic filler and the filler content in the composition was the value shown in Table 1. In the evaluation, in Examples 1 to 3 and 5, a uniform dispersion kneaded product having a length of 5 cm × a width of 5 cm × a thickness of 5 mm was obtained by melt-kneading (molding temperature: 210°C) with a twin-screw extruder, and used for evaluation. In addition, in Example 4, a separately prepared emulsion of EVOH3 (solid content concentration 22%) and inorganic filler were uniformly stirred and mixed in a batch mixer, and statically dried to obtain a uniform dispersion kneaded material (inorganic filler content: 87% by mass) of 5 cm length × 5 cm width × 5 mm thickness was obtained and used for evaluation.

The emulsion used in Example 4 was produced by an extrusion forced mechanical emulsification method using a twin screw extruder, and was obtained as an emulsion solution of EVOH3 having a solid content concentration of 22% and average particle diameter of 2 µm.

Details of the resins shown in Table 1 are as follows.
PVA1: "Nichigo G-Polymer (registered trademark) BVE8049P" manufactured by Mitsubishi Chemical Corporation, modified PVA-based resin containing a side chain 1,2-diol structural unit, and having saponification degree of 99.2% and hydrogen ratio of 9.4% by mass
EVOH1: "Soarnol (registered trademark) DT2904RB" manufactured by Mitsubishi Chemical Corporation, EVOH having an ethylene content of 29 mol%, saponification degree of 99.9%, and a hydrogen ratio of 10.2% by mass
EVOH2: "Soarnol (registered trademark) AT4403B" manufactured by Mitsubishi Chemical Corporation, EVOH having an ethylene content of 44 mol%, saponification degree of 99.9%, and a hydrogen ratio of 10.8% by mass
EVOH3: "Soarnol (registered trademark) DC3212B" manufactured by Mitsubishi Chemical Corporation, EVOH having an ethylene content of 32 mol%, saponification degree of 99.9%, and a hydrogen ratio of 10.3% by mass
EVOH4: "Melthene H005 1K" manufactured by Tosoh Corporation, ethylene content: 89 mol%, saponification degree: 99 mol%, MFR: 6.5 g/10 min: (190°C, load: 2160 g) and hydrogen ratio: 13.1% by mass

### (Comparative Example 1)

In the same manner as in Example 1 except that high-density polyethylene ("NOVATEC HD HJ360" manufactured by Mitsubishi Chemical Corporation, hydrogen ratio: 14.3% by mass) was used instead of PVA1, a molded product having a length of 5 cm, a width of 5 cm, and a thickness of 5 mm was obtained by uniformly melt-kneading the high-density polyethylene and the filler, and used for evaluation.

### (Example 6)

As shown in Table 2, in the same manner as in Example 2, a composition (radiation shielding composition) in which EVOH1 and an inorganic filler were mixed was melt-kneaded (molding temperature: 210°C) with a twin-screw extruder to obtain a uniform dispersion kneaded material having a size of 5 cm in length × 5 cm in width × 1 mm in thickness, and was used for evaluation.

### (Example 7)

70% by mass of an emulsion solution of EVOH (EVOH3) having a solid content concentration of 22% and an average particle diameter of 2 µm used in Example 4 and 30% by mass of an inorganic filler (Gd ₂O ₃ powder, manufactured by Nippon Yttrium Co., Ltd., product name: gadolinium oxide 99.9%, average particle diameter 2.32 µm) were uniformly stirred and mixed by a batch-type mixer, and statically dried to obtain a uniform dispersion kneaded product (inorganic filler content: 66% by mass) having a size of 5 cm × 5 cm × a thickness of 1 mm, and used for evaluation.

### (Example 8)

As shown in Table 2, in the same manner as in Example 6 except that EVOH4 was used instead of EVOH1, a molded product of 5 cm in length × 5 cm in width × 1 mm in thickness was obtained by uniformly melt-kneading EVOH4 and an inorganic filler, and used for evaluation.

### (Comparative Example 2)

As shown in Table 2, in the same manner as in Example 6 except that high-density polyethylene ("NOVATEC HD HJ360" manufactured by Mitsubishi Chemical Corporation, hydrogen ratio: 14.3% by mass) was used instead of EVOH1, a molded product having a length of 5 cm × a width of 5 cm × a thickness of 1 mm was obtained by uniformly melt-kneading high-density polyethylene and an inorganic filler, and used for evaluation.

### (Evaluation)

For each composition, a plate-shaped evaluation molded product was produced as described above, and the neutron transmittance was evaluated. A gold foil was set on each of the front and back surfaces (both main surfaces) of the evaluation molded sample, and neutrons were irradiated from the front side of the sample toward the sample in a direction parallel to the plate thickness direction. Any of the main surfaces of the sample may be any surface. The accelerator neutron source was generated under the following conditions. The gold foils set on the front and back sides of the sample were arranged so as not to overlap each other when viewed parallel to the plate thickness direction (that is, the irradiation direction of neutrons) of the sample.

When neutrons are irradiated, the gold foil is radiated. The transmittance (shielding ratio) of neutrons was evaluated from the ratio of the radioactivity intensity of the gold foil on the back side irradiated with neutrons transmitted through the sample to the radioactivity intensity of the gold foil on the sample front side directly irradiated with neutrons. That is, the smaller the ratio (transmittance), the better the neutron shielding performance of the sample. The results are shown in Table 1 and 2.

### (Accelerator Neutron Source)

Accelerator: Cyclotron HM-18HC manufactured by Sumitomo Heavy Industries, Ltd.
Acceleration particles: protons 18 MeV
Target: Be
Generation nuclear reaction: 7Be (p, n) 7B reaction irradiation current: up to 120 µA
Irradiation time: 3 hours

### [Table 1]

**Table 1**

| | Resin | Filler | Filler content | Type | Neutron transmittance | Sample thickness |
|---|---|---|---|---|---|---|
| Example 1 | PVA1 | Gd₂O₃ | 30% by mass | Melt-kneading | 17.80% | 5 mm |
| Example 2 | EVOH1 | Gd₂O₃ | 30% by mass | Melt-kneading | 17.52% | 5 mm |
| Example 3 | EVOH2 | Gd₂O₃ | 30% by mass | Melt-kneading | 17.72% | 5 mm |
| Example 4 | EVOH3 | Gd₂O₃ | 87% by mass | Emulsion mixture | 16.15% | 5 mm |
| Example 5 | EVOH4 | Gd₂O₃ | 30% by mass | Melt-kneading | 18.55% | 5 mm |
| Comparative Example 1 | High-density polyethylene | Gd₂O₃ | 30% by mass | Melt-kneading | 18.92% | 5 mm |

### [Table 2]

**Table 2**

| | Resin | Filler | Filler content | Type | Neutron transmittance | Sample thickness |
|---|---|---|---|---|---|---|
| Example 6 | EVOH1 | Gd₂O₃ | 30% by mass | Melt-kneading | 21.67% | 1 mm |
| Example 7 | EVOH3 | Gd₂O₃ | 66% by mass | Emulsion mixture | 18.00% | 1 mm |
| Example 8 | EVOH4 | Gd₂O₃ | 30% by mass | Melt-kneading | 25.49% | 1 mm |
| Comparative Example 2 | High-density polyethylene | Gd₂O₃ | 30% by mass | Melt-kneading | 28.93% | 1 mm |

From the results in Table 1, it was confirmed that the compositions of Examples 1 to 3 and 5 containing the PVA-based resin exhibited more excellent neutron shielding performance than the composition of Comparative Example 1 having the same filler content, and were suitable for the radiation shielding composition. The reason for this is considered to be because the amount of hydrogen bonding between hydroxyl groups of polyvinyl alcohol derived from the crystalline portion derived from polyethylene was increased. Among them, the composition of Example 2 containing EVOH1 having an ethylene content of 29 mol% and the composition of Example 3 containing EVOH2 having an ethylene content of 44 mol% were more excellent in neutron shielding performance than the composition of Example 1 containing PVA1 and the composition of Example 5 containing EVOH4 having an ethylene content of 89 mol%.
The composition of Example 4 was obtained as an emulsion mixed liquid composition before being statically dried, and had properties suitable for being used as a coating or a coating material. By using the emulsion mixed liquid composition, the heating temperature in the mixing step was lowered, so that more fillers could be contained, and the neutron shielding performance was more excellent.

The same tendency was observed in the comparison between Examples 6 to 8 in which the sample thickness was changed to 1 mm and Comparative Example 2.

Although the present invention has been described in detail with reference to the specific embodiment, it will be apparent to those skilled in the art that various changes and modifications can be made without departing from the spirit and scope of the present invention. The present application is based on a Japanese Patent Application (No. 2023-030175) filed on February 28, 2023 and a Japanese Patent Application (No. 2024-028793) filed on February 28, 2024, contents of which are incorporated herein by reference.

## Claims

1. A radiation shielding composition comprising a polyvinyl alcohol-based resin.

2. The radiation shielding composition according to claim **1,** wherein the radiation includes one or more selected from the group consisting of neutrons, protons, and heavy particles.

3. The radiation shielding composition according to claim **1,** wherein the polyvinyl alcohol-based resin comprises an ethylene-vinyl ester-based copolymer saponified product.

4. The radiation shielding composition according to claim 3, wherein the ethylene-vinyl ester copolymer saponified product has an ethylene content of 0.1-77 mol%.

5. The radiation shielding composition according to claim 3, wherein the ethylene-vinyl ester copolymer saponified product has an ethylene content of 20-60 mol%.

6. The radiation shielding composition according to claim **1,** wherein the polyvinyl alcohol-based resin contains a modified polyvinyl alcohol-based resin containing a side chain 1,2-diol structural unit.

7. The radiation shielding composition according to claim 1, further comprising an inorganic filler.

8. The radiation shielding composition according to claim 7, comprising 30% by mass or more of the inorganic filler.

9. The radiation shielding composition according to claim 7, wherein the inorganic filler comprises at least one selected from the group consisting of Gd₂O₃, B₂O₃, B₄C and LiF.

10. The radiation shielding composition according to any one of claims 1 to 9, which is an aqueous or solvent-based resin emulsion.

11. A coating or a coating material comprising the radiation shielding composition according to any one of claims 1 to 10.

12. A molded product comprising the radiation shielding composition according to any one of claims 1 to 10.

13. A medical device having a layer formed using the coating or the coating material according to claim 11.

14. An electronic member having a layer formed using the coating or the coating material according to claim 11.

15. A member for nuclear power generation having a layer formed using the coating or the coating material according to claim 11.

16. A member for aircraft or space having a layer formed using the coating or the coating material according to claim 11.

17. A medical device comprising the molded product according to claim 12.

18. An electronic member comprising the molded product according to claim 12.

19. A member for nuclear power generation comprising the molded product according to claim 12.

20. A member for aircraft or space having the molded product according to claim 12.

21. A composition comprising a polyvinyl alcohol-based resin and at least one selected from the group consisting of compounds containing at least one of Gd, B, and Li.

22. The composition according to claim 21, which is used as a radiation shielding composition.
